Europäisches Patentamt

(19) European Patent Office

Office européen des brevets

(11) Publication number: **0 286 449**
**A1**

## (12) EUROPEAN PATENT APPLICATION

(21) Application number: 88303205.4

(22) Date of filing: 11.04.88

(51) Int. Cl.⁴: **C 01 B 7/19**
**C 01 C 1/02**

(30) Priority: 10.04.87 US 37158

(43) Date of publication of application:
12.10.88 Bulletin 88/41

(84) Designated Contracting States:
AT BE CH DE ES FR GB GR IT LI LU NL SE

(71) Applicant: INTERNATIONAL MINERALS & CHEMICAL
CORPORATION
2315 Sanders Road
Northbrook, Illinois (US)

(72) Inventor: Eyal Aharon M.
Kibbutz Ramat
Rachel (IL)

(74) Representative: Bannerman, David Gardner et al
Withers & Rogers 4 Dyer's Buildings Holborn
London, EC1N 2JT (GB)

(54) Recovery of ammonia and hydrogen fluoride from ammonium fluoride solutions.

(57) A method of recovering hydrogen fluoride and ammonia from an aqueous ammonium fluoride solution is provided. Ammonia and water are evaporated from a mixed liquor having an aqueous phase and an organic phase. The aqueous phase of the mixed liquor has a total fluorine concentration of at least about 15 wt% and an ammonium fluoride molar fraction of at least about 0.67. The mixed liquor is formed by combining the aqueous ammonium fluoride solution with (i) an aqueous solution of ammonium fluoride and ammonium bifluoride; (ii)a strong amine extractant which is immiscible in the aqueous solution of ammonium fluoride and ammonium bifluoride; and (iii) water. The evaporation of ammonia and water from the mixed liquor causes the amine to become loaded with hydrogen fluoride. The HF-loaded amine is recovered from the mixed liquor and hydrogen fluoride is stripped therefrom in an amount sufficient to lower the HF:amine molar ratio by at least about 0.2.

EP 0 286 449 A1

**Description**

## RECOVERY OF AMMONIA AND HYDROGEN FLUORIDE FROM AMMONIUM FLUORIDE SOLUTIONS

BACKGROUND OF THE INVENTION

1. Field of the Invention

The present invention relates to a method of recovering ammonia and hydrogen fluoride from an aqueous ammonium fluoride solution and more particularly to such a method of recovery utilizing an amine extractant.

2. Description of the Prior Art

Hydrofluoric acid has been commercially produced by treating fluorspar with sulfuric acid yielding hydrogen fluoride gas and calcium sulfate. The hydrogen fluoride thus produced contains varying amounts of inert contaminants such as carbon dioxide, air, water vapor, sulfur dioxide and silicon tetrafluoride derived from silica impurities in the fluorspar. The removal of these contaminants, especially fluosilicic acid, has proved troublesome and expensive. In addition, the cost of the raw materials low impurity fluorspar and sulfuric acid) used in this process has risen in recent years.

In response to the rising cost of hydrofluoric acid produced from fluorspar using sulfuric acid, a number of substitute processes have been devised. For example, the phosphate rock fertilizer industry has long been plagued by the problem of waste by-product fluorine compounds, principally fluosilicic acid and silicon tetrafluoride. These fluorine compounds comprise environmentally polluting waste products.

In an attempt to convert these undesirable pollutants into a marketable hydrogen fluoride product, the industry has developed a number of conversion processes. Many patents describe methods of recovering HF from $NH_4F$ solutions obtained by reacting ammonia with fluosilicic acid. See, for example, U.S. Patents Nos. 3,101,254; 3,128,152; 3,338,673; 3,914,398; 4,089,936; and 4,144,315. In all of these processes the ammonium fluoride is at least partially converted to bifluorides by ammonia evaporation. The vapor phase composition above an ammonium fluoride containing solution is determined by the total fluorine concentration and by the ammonium fluoride molar fraction of the solutes. See U.S. Patent No. 3,106,449. With the evaporation of ammonia, the ammonium fluoride molar fraction is lowered causing a large decrease in the ammonia fraction in the vapor phase. Accordingly, complete conversion of ammonium fluoride to ammonium bifluoride requires evaporating to dryness and the treatment of molten salts. Molten salt formation however can be avoided by crystalizing bifluorides after partial conversion. Unfortunately, high temperatures have generally been required to recover the hydrogen fluoride from the crystalized bifluoride salts. See for example, U.S. Patent Nos. 3,101,254 and 3,316,060.

Accordingly, it is an object of the present invention to provide a method of converting an aqueous ammonium fluoride solution directly into ammonia and hydrogen fluoride without forming molten salts, without crystallizing bifluorides, without high temperature heating or oxidation and without consuming acid.

It is a further object of the present invention to provide such a method wherein evaporation of ammonia and extraction of hydrogen fluoride is accomplished in a single stage.

SUMMARY OF THE INVENTION

These and other important objects of the invention are achieved by a method of recovering hydrogen fluoride and ammonia from an aqueous ammonium fluoride solution. Ammonia and water are evaporated from a mixed liquor having an aqueous phase and an organic phase. The aqueous phase of the mixed liquor has a total fluorine concentration of at least about 15 wt% and an ammonium fluoride molar fraction of at least about 0.67.

As used herein, the term "ammonium fluoride molar fraction of an aqueous phase" is defined as the molar concentration of ammonium fluoride divided by the sum of the molar concentration of ammonium fluoride and the molar concentration of ammonium bifluoride in the aqueous phase.

The mixed liquor is formed by combining the aqueous ammonium fluoride solution with (i) an aqueous solution of ammonium fluoride and ammonium bifluoride; (ii) a strong amine extractant which is also immiscible in the aqueous solution of ammonium fluoride and ammonium bifluoride; and (iii) water.

As used herein, the term "strong amine" is defined as an amine which is able to achieve an HF:amine molar ratio of at least about 1.2 while in equilibrium with an aqueous phase having a total fluorine concentration of at least 15 wt. % and an ammonium fluoride molar fraction of at least about 0.67 at the evaporation temperature. If the amine is unable to achieve an HF:amine molar ratio of at least about 1.2 while in said equilibrium, the amine is unsuitable for use in the present invention.

The evaporation of ammonia and water from the mixed liquor causes the amine in the extractant to become loaded with hydrogen fluoride. The HF-loaded extractant is recovered from the mixed liquor and hydrogen fluoride is stripped therefrom in an amount sufficient to lower the HF:amine molar ratio by at least about 0.2.

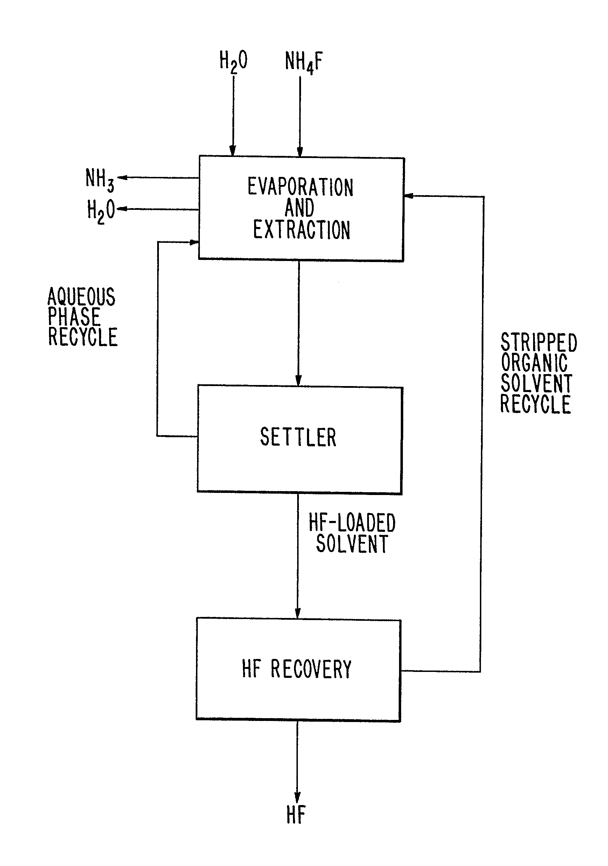

BRIEF DESCRIPTION OF THE DRAWING

The figure illustrates one embodiment of a continuous method of recovering hydrogen fluoride and ammonia from an aqueous ammonium fluoride solution according to the invention.

## DETAILED DESCRIPTION

A unique method has been found which overcomes the above mentioned difficulties of the prior art methods by simultaneously evaporating ammonia and extracting hydrogen fluoride from an aqueous solution of ammonium fluoride. Although a high ammonia concentration in the vapor phase requires a high $NH_4F$:$HF$ molar ratio (or a high $NH_4F$ molar fraction), and conversely efficient HF extraction requires a low $NH_4F$:$HF$ molar ratio (or a low $NH_4F$ molar fraction), a molar ratio range was found in which both high ammonia concentration in the vapor phase and efficient HF extraction are possible, as long as a strong amine extractant is used.

Addition of $NH_4F$ solution and a strong amine extractant to a boiling ammonium bifluoride/ammonium fluoride-containing liquor in this molar ratio range results in (1) evaporation of ammonia and water; and (2) extraction of HF. In this range, ammonia evaporation benefits from the extraction as the extraction keeps both the $NH_4F$ molar fraction in the aqueous phase and the ammonia concentration in the vapor phase high throughout the process, thereby avoiding evaporation to dryness. In this way the ammonia and water contents of the aqueous ammonium fluoride are evaporated (concentrated $NH_4F$ solutions may require some dilution) and the HF is extracted. HF stripping from the HF-loaded strong amine extractant completes the recovery of hydrogen fluoride and ammonia from the aqueous ammonium fluoride solutions.

The mixed liquor of the present invention is formed by combining aqueous ammonium fluoride solution, an aqueous solution of ammonium fluoride and ammonium bifluoride, a strong amine extractant and water. The mixed liquor accordingly has an aqueous phase, comprising the aqueous ammonium fluoride solution, the aqueous solution of ammonium fluoride and ammonium bifluoride and water, as well as at least one organic phase comprising the strong amine extractant.

The aqueous phase of the mixed liquor used in the method of the present invention should have a total fluorine concentration, of at least about 15 wt. % and preferably at least about 20 wt. %. The aqueous phase of the mixed liquor should also have an ammonium fluoride molar fraction above about 0.67 and preferably above about 0.75.

The strong amine extractant must be immiscible in the aqueous phase of the mixed liquor. The strong amine extractant must also be immiscible in the aqueous solution of $NH_4F$ and $NH_4HF_2$ so that it can later be easily recovered therefrom. Suitable strong amine extractants include amines, amine-HF complexes, quaternary amine fluorides and mixtures thereof with inert organic diluents e.g., inert organic diluents having a boiling point greater than the temperature at which the evaporation is conducted. Examples of suitable diluents include liquid paraffins and kerosene. Of the strong amines, primary, secondary, tertiary and quaternary amines may be used. Especially preferred are the quaternary amine fluorides. A suitable quaternary amine fluoride can be obtained by conversion of a commercial grade methyl tricaprylyl amine chloride (such as that sold by Henkel Corporation under the trademark ALIQUAT 336) to the amine fluoride with an ammonium fluoride solution as described in the Example.

The mixed liquor containing the aqueous and organic phases is heated to a temperature sufficient to evaporate ammonia and water at the pressure at which the evaporation is conducted. Preferably, evaporation is conducted at sub-atmospheric pressure. Generally, the mixture will be heated to a temperature within the range of about 80° to 130°C and preferably to about the temperature of the boiling point of the aqueous phase of the mixed liquor at the chosen pressure.

In the method of the present invention, the evaporation of ammonia and water is always performed simultaneously with the extraction of HF from the aqueous phase by the strong amine extractant. Thus, the method of the present invention accomplishes direct conversion of ammonium fluoride into ammonia and hydrogen fluoride without the intermediate formation of bifluorides.

Once equilibrium is reached, the HF-loaded extractant is separated from the aqueous phase and the HF is then stripped therefrom. Hydrogen fluoride stripping may be conducted according to any number of well-known recovery techniques such as heating and/or washing of the HF-loaded extractant.

The method of the present invention may be performed for example by establishing a boiling substantially saturated liquor with an ammonium fluoride molar fraction of 0.91. The vapor phase above such a liquor would contain 10% ammonia. On slow addition of 80 kg of 25% $NH_4F$ solution, 20 kg water and 177 kg of methyl tricaprylyl amine fluoride to the well-stirred mother liquor, which may be kept boiling at 80°C by maintaining it under sub-atmospheric pressure, the added quantities of water and ammonia would be evaporated while HF is extracted into the amine. The amine is then separated from the aqueous phase and HF stripped therefrom.

Preferably, the method of the present invention is conducted as a continuous process, as is illustrated in the Figure, wherein fresh aqueous ammonium fluoride solution, water and a strong amine extractant are continuously supplied to the evaporation and extraction apparatus in which ammonia and water are evaporated while HF is extracted by the amine as described above. Mixed liquor is conveyed to a settler for separation of the HF-loaded organic phase from the aqueous phase. The aqueous phase is then recylced to the evaporation and extraction apparatus. The HF-loaded extractant is continuously withdrawn from the settler and conveyed to a recovery apparatus in which hydrogen fluoride is stripped from the amine. The stripped extractant is then recycled for further extraction.

An alternative method of recovering hydrogen fluoride and ammonia from an aqueous ammonium fluoride solution does not utilize an aqueous solution containing ammonium fluoride and ammonium bifluoride. This method requires evaporation of rather large amounts of water making the process somewhat less attractive economically. The method comprises evaporating ammonia and water from a mixed liquor obtained by mixing the aqueous ammonium fluoride solution with water and a strong amine extractant. The extractant may be any of those strong amine extractants mentioned earlier as long as it is immiscible in the ammonium fluoride and ammonium bifluoride containing solution (this solution is formed as soon as evaporation of ammonia from the ammonium fluoride solution takes place). The phase separation and HF stripping steps may be performed in accordance with the methods described earlier.

One embodiment of the present invention will now be described in the following example which is illustrative of, but does not in any way limit the scope of the invention.

## EXAMPLE

One part by volume of methyl tricaprylyl amine chloride (Aliquat 336, Henkel Corp.) was mixed with two parts by volume of ordorless kerosene. This mixture was equlibrated several times with 40% $NH_4F$ solutions at 50°C in order to convert the amine chloride to an amine fluoride. The thus obtained methyl tricaprylyl amine fluoride solution was used as the extractant. Samples of the amine fluoride solutions were each equilibrated at 80°C with one of four different aqueous solutions containing ammonium bifluoride and ammonium fluoride and having high $NH_4F$ molar fractions between 0.82 and 0.97. Two organic phases were formed in addition to the aqueous phase in each of the four cases. The volume ratio of the two organic phases was dependent upon the molar fraction of $NH_4F$. The phases were separated and analyzed. The fluorine content in the lighter organic phase in all four cases was less than 0.2%.

The results which are presented in the Table show that the extraction efficiency is influenced by the equilibrium ammonium fluoride molar fraction in the aqueous phase and that extraction efficiency decreases with increasing $NH_4F$ molar fraction. More importantly, the Table shows that a range exists over which suitable extraction efficiency is achieved (ie, the HF:amine molar ratio varies between 1.9 and 2.7). Throughout this range, HF extraction efficiency varies inversely with the concentration of ammonia in the vapor phase at equilibrium. Those skilled in the art can easily optimize this tradeoff between HF extraction and ammonia recovery.

## TABLE

| aqueous phase in equilibrium | heavy organic phase in equilibrium | | | vapor phase in equilibrium |
|---|---|---|---|---|
| $NH_4F$ molar fraction | volume fraction of the heavy organic phase | F(wt%) | HF:Amine molar ratio | $NH_3$ (wt.%) |
| 0.82 | 0.75 | 6.54 | 2.7 | 3 |
| 0.87 | 0.85 | 6.16 | 2.4 | 7 |
| 0.91 | 0.90 | 5.47 | 2.3 | 10 |
| 0.97 | 0.95 | 4.60 | 1.9 | 22 |

## Claims

1. A method of recovering hydrogen fluoride and ammonia from an aqueous ammonium fluoride solution comprising:

a) evaporating ammonia and water from a mixed liquor, said mixed liquor having an aqueous phase and an organic phase, the aqueous phase of the mixed liquor having a total fluorine concentration of at least about 15 wt.% and an ammonium fluoride molar fraction of at least about 0.67, the mixed liquor being formed by combining the aqueous ammonium fluoride solution with:

(i) an aqueous solution of $NH_4F$ and $NH_4HF_2$;

(ii) a strong amine extractant which is immiscible in the aqueous solution of $NH_4F$ and $NH_4HF_2$;

and

   (iii) water;

b) recovering HF-loaded amine from the mixed liquor; and

c) stripping hydrogen fluoride from the recovered HF-loaded amine in an amount sufficient to lower the HF:amine molar ratio by at least about 0.2.

2. A method of recovering hydrogen fluoride and ammonia from an aqueous ammonium fluoride solution comprising:

a. evaporating ammonia and water from a mixed liquor having an aqueous phase and an organic phase, the mixed liquor being formed by combining said ammonium fluoride solution, water and a strong amine extractant which is immiscible in an aqueous solution of ammonium fluoride and ammonium bifluoride;

b) recovering the HF-loaded amine from the mixed liquor; and

c) stripping hydrogen fluoride from the recovered amine in an amount sufficient to lower the HF:amine molar ratio by at least about 0.2.

3. The method of claim 1 or 2, wherein the extractant comprises a quaternary amine fluoride.

4. The method of claim 1, wherein the aqueous phase of the mixed liquor has a fluorine concentration of at least about 20 wt. %.

5. The method of claim 1 or 2, wherein the temperature of the mixed liquor is in the range of about 80° to about 130°C.

6. The method of claim 1 or 2, wherein the mixed liquor is heated at sub-atmospheric pressure to evaporate ammonia and water.

7. The method of claim 1 or 2, wherein the strong amine is combined with an inert organic diluent having a boiling point greater than the temperature of the mixed liquor.

8. The method of claim 7, wherein the inert organic solvent is selected from the group consisting of liquid paraffins and kerosene.

9. The method of claim 1 or 2, including the additional step of recycling the strong amine extractant after the HF is recovered therefrom.

10. The method of claim 1 or 2, including the additional step of recycling the aqueous phase after the HF-loaded amine is separated therefrom.

11. The method of claim 1, wherein the aqueous phase has an ammonium fluoride molar fraction of at least about 0.75.

12. The method of claim 3 wherein the quaternary amine fluoride is methyl tricapylyl amine fluoride.

0286449

$H_2O$    $NH_4F$

EVAPORATION AND EXTRACTION

$NH_3$

$H_2O$

AQUEOUS PHASE RECYCLE

STRIPPED ORGANIC SOLVENT RECYCLE

SETTLER

HF-LOADED SOLVENT

HF RECOVERY

HF

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A,D | US-A-3 338 673 (J.A. PETERSON et al.) --- | | C 01 B 7/19 C 01 C 1/02 |
| A | GB-A-1 137 037 (PRODUITS CHIMIQUES PECHINEY-SAINT-GOBAIN) ----- | | |

TECHNICAL FIELDS SEARCHED (Int. Cl.4)

C 01 B
C 01 C

The present search report has been drawn up for all claims

| Place of search | Date of completion of the search | Examiner |
|---|---|---|
| THE HAGUE | 09-06-1988 | VAN BELLINGEN I.C.A. |

EPO FORM 1503 03.82 (P0401)